# EUROPEAN PATENT SPECIFICATION

(11) **EP 2 990 191 B1**
(45) Date of publication and mention of the grant of the patent: **26.12.2018**
(21) Application number: 15181506.5
(22) Date of filing: 19.08.2015
(51) Int. Cl.: B29D 30/42

(54) **TIRE PLY AND METHOD OF ITS MANUFACTURE**
REIFENVERSTÄRKUNGSLAGE UND VERFAHREN ZU DEREN HERSTELLUNG
NAPPE DE PNEU ET SON PROCÉDÉ DE FABRICATION

(30) Priority: 28.08.2014 US 201462042947 P; 26.06.2015 US 201514751355
(43) Date of publication of application: 02.03.2016
(73) Proprietor: The Goodyear Tire & Rubber Company, Akron, Ohio 44316 (US)
(72) Inventor: CHEN, Hongbing, Broadview Heights, OH Ohio 44147 (US); BURG, Gary Robert, Massillon, OH Ohio 44646 (US); HUNT, Nathan Andrew, Akron, OH Ohio 44312 (US); DYRLUND, Christopher David, Canton, OH Ohio 44705 (US); DE MONTE, Patrice, B-6700 Arlon (BE)
(74) Representative: Kutsch, Bernd

(56) References cited:
- EP-A1- 1 072 395
- DE-A1- 1 579 213
- JP-A- S5 591 649
- US-A- 4 261 393
- US-A- 5 200 009
- US-A1- 2003 051 794

## Description

### Field of the Invention

The invention relates to tire ply and to a method of manufacturing ply.

### Background of the Invention

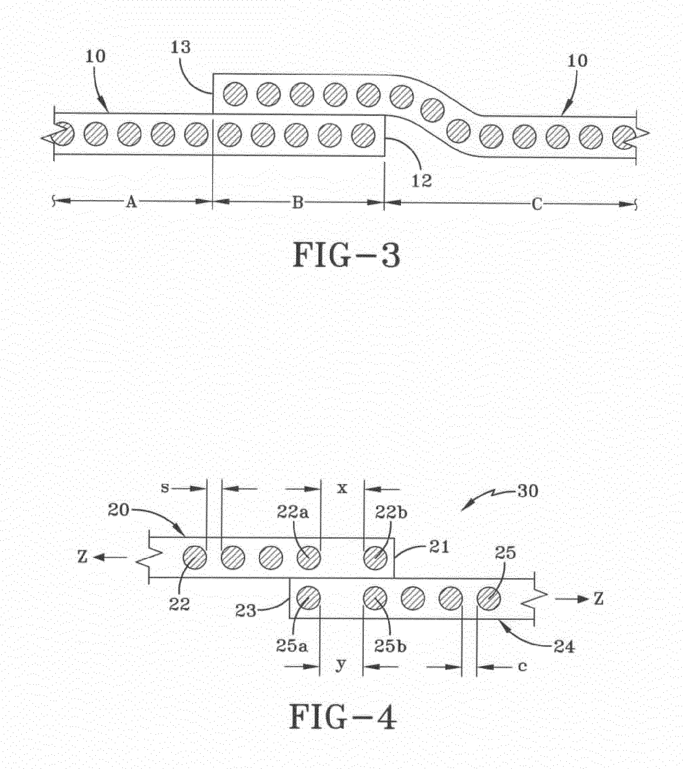

Tires typically comprise one or more layers of ply. The one or more plies are typically applied in a sheet form onto a tire building drum. The sheet of ply is wrapped about the drum, cut to the desired length and then assembled together. The cut ends of each sheet are spliced together. The ends of the ply are typically overlapped as a lap joint, as shown in Figure 3. This stock is then rolled up and taken to the tire building drum. Once built into a finished tire, the ply in regions B causes a restriction in the ply due to the added strength and stiffness of the overlapped ply cords. Regions A and C typically have excessive spreading between the cords due to their proximity to the restriction in region B. The overlap of ply material can contribute to tire high speed non-uniformity and can also cause visible depressions in the sidewall. It is known in the art to join the ply ends via a butt splice, wherein there is no overlap of material. However, forming a butt splice joint generally requires additional capital equipment in order to form the butt splice. The butt splice is also not as strong or as reliable as the lap slice.

Thus an improved method and apparatus for forming a splice that does not require an additional investment in capital equipment is described.

US-A-4,261,393 describes a tire cord fabric made by splicing two ply strips using a lap joint. The overlapping cords in the two lap-joint strips are vertically aligned and the spacing of the cords at the end of the splice strips is different from the spacing of the cords in other parts of the strips.

Other tire plies joined by forming a lap splice between two ply strips and an uneven distribution of the reinforcement cords in the splice strip ends compared to the remaining part of the ply are also disclosed in US-A-5,200,009, DE-A-1 579 213, JP-A-55-91649 and US-A-2003/0051794.

EP-A-1 072 395 describes a method of splicing a tire ply using a butt splice with angled ends of the spliced together ply strips.

### Summary of the Invention

The invention relates to a method of manufacturing a layer of ply in accordance with claim 1 and to a pneumatic tire in accordance with claim 10 respectively.

Dependent claims refer to preferred embodiments of the invention.

In a first aspect, the invention provides a method of forming a layer of tire ply by providing a first strip of ply having a plurality of evenly spaced reinforcement cords with a spacing s, and having a lateral end, wherein two cords at the lateral end are spaced apart a distance x, wherein x is not equal to s; providing a second strip of ply having a plurality of evenly spaced reinforcement cords having the spacing s or a different spacing c, and having a lateral end, wherein two cords at the lateral end are spaced apart a distance y, wherein y is not equal to s or c respectively; and joining the first and second lateral ends so that the spacing x completely overlaps with the spacing y.

### Definitions

"Bead" or "Bead Core" means generally that part of the tire comprising an annular tensile member, the radially inner beads are associated with holding the tire to the rim being
wrapped by ply cords and shaped, with or without other reinforcement elements such as flippers, chippers, apexes or fillers, toe guards and chafers.

"Carcass" means a laminate of tire ply material and other tire components cut to length suitable for splicing, or already spliced, into a cylindrical or toroidal shape. Additional components may be added to the carcass prior to its being vulcanized to create the molded tire.

"Cord" means one of the reinforcement strands, including fibers, which are used to reinforce the plies.

"Ply" means a cord-reinforced layer of elastomer-coated, radially deployed or otherwise parallel reinforcement cords.

"Radial Ply Structure" means the one or more carcass plies or which at least one ply has reinforcing cords oriented at an angle of between 65º and 90º with respect to the equatorial plane of the tire.

"Radial Ply Tire" means a belted or circumferentially-restricted pneumatic tire in which the ply cords which extend from bead to bead are laid at cord angles between 65º and 90º with respect to the equatorial plane of the tire.

### Brief Description of the Drawings

The invention will be described by way of example and with reference to the accompanying drawings in which:
FIG. 1 is a schematic top view of a ply fabric undergoing shearing;
FIG. 2 is a schematic of the cut ply material shown spliced together on a tire drum;
FIG. 3 is a cross-sectional view of a conventional lap splice;
FIG. 4 is a cross-sectional view of a comparative example of a lap joint formed from two ends of a ply which are joined together;
FIG. 5A and 5B are cross-sectional views of comparative examples;
FIG. 6 is a cross-sectional view of an embodiment of a lap joint formed from two ends of a ply which are joined together;

### Detailed Description of Example Embodiments of the Invention

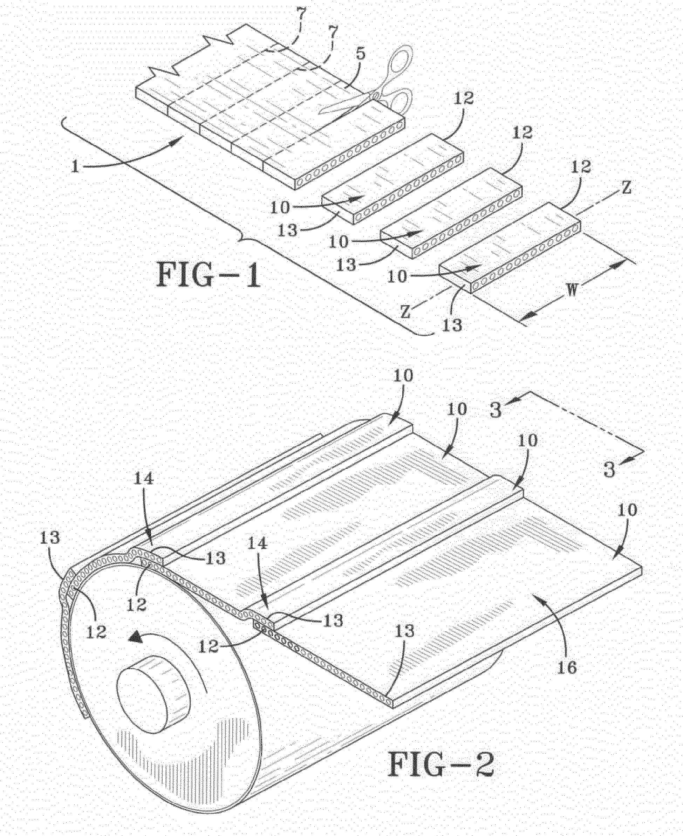

A comparative example is shown in Figure 4, which illustrates a lap joint 30. The inventive lap joints described herein are useful for joining together ends of reinforcement ply. The lap joint is also useful for joining together ends 21, 23 of a first ply strip 20 and a second ply strip 24. The ply strips 20, 24 are the same as strips 10 shown in Figure 1. The ply strips have a defined width W and a defined length L. The reinforcement cords in each strip are in parallel alignment with the longitudinal axis of the strip as shown in Fig. 2. The first ply strips 20, 24 are made from the process as shown in Figure 1, wherein the lateral end 13 of a first strip is joined to the lateral end 12 of a second strip in the form of a lap joint 14, continuing the process to form a sheet of ply 16 as shown in Figure 2. The lateral ends 12, 13 are overlapped, so that the cords of each end are in parallel alignment as shown in Figure 2. The lap joint 14 may also be used to join together the lateral ends of a sheet of ply.

As shown in Figure 4, the lateral end 21 of the first ply strip 20 has a plurality of parallel cords 22 arranged transverse to the length of the strip of the material. The cords 22 are in parallel alignment and are evenly spaced apart a distance s throughout the length of the first ply 20, except at the lateral end 21. The ply cords typically have an epi (ends per 2.54 cm) in the range of from 17 to 35, resulting in a range of s of 0.001 to 0.02 inch (1 inch = 2.54 cm). At the lateral end, the spacing x between the last two cords is in the range of from 1.5 *s to 4*s, more preferably 2*s to 3*s and most preferably 3*s. In the embodiment shown in Figure 4, the distance s is equal to 2*s + D, wherein D is the cord diameter. The second ply strip 24 has a plurality of parallel aligned cords 25 arranged transverse to the length of the sheet of the material. The cords 25 are evenly spaced apart a distance c through the length of the second ply, except at the lateral end 23. At the lateral end 23, the spacing y between the last two cords is in the range of 1.5*c to 4*c, more preferably 2*c to 3*c, and most preferably 3*c. The distance c may be equal to the distance s or different. In one embodiment it is equal. The spacing x may be equal to the distance y or different. In one embodiment it is equal. The diameter D of the cords in the first ply strip 20 may be equal to or different from the diameter D' of the cords in the second ply strip 24. In one embodiment it is equal.

In the comparative example shown in Figure 4, the distance y is equal to 2*c + D, wherein D is the cord diameter. As shown in Figure 4, the spacing x is in parallel alignment with the spacing y. Preferably, the spacing x exactly overlaps with the spacing y so that the cords 22a, 22b on either end of the spacing x are in parallel alignment with the cords 25a, 25b on either end of the spacing y. More preferably, x equals y. In the spacings x and y, there is no cord present, and there is no partial cord/broken cord present.

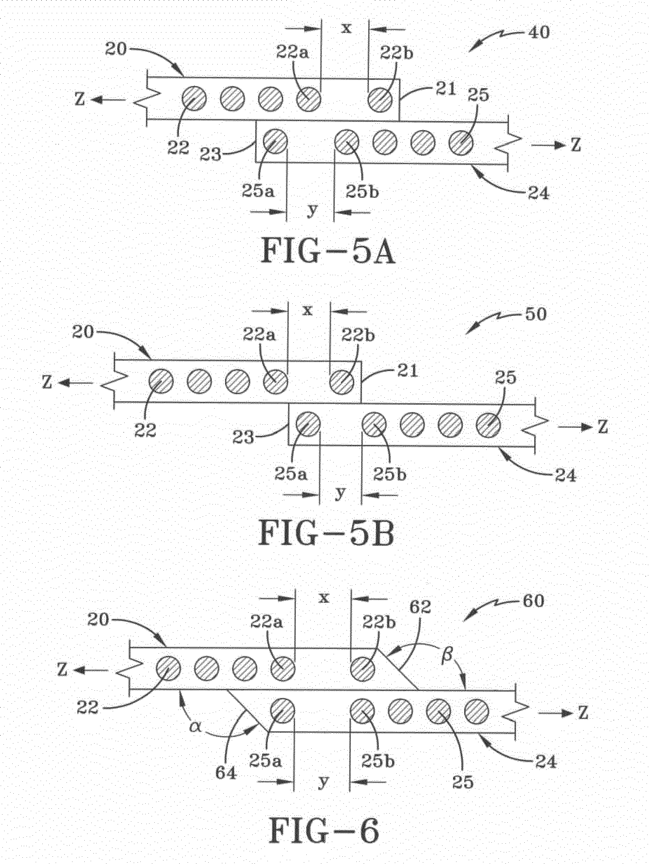

Figure 5A illustrates a comparative example 40 of a ply lap joint. The lap joint 40 is formed so that there is a slight overlap of the x and y spacing in the transverse direction, but the cords 22a, 25a and cords 22b, 25b are not aligned in the transverse direction. Reinforcement cord 25b is located between reinforcement cords 22a, 22b of the strip 20. Reinforcement cord 25b is located opposite the x spacing, and reinforcement cord 22a is located opposite the y spacing.

Figure 5B illustrates a comparative example 50 with a slight overlap of the x and y spacing in the transverse direction. The cords 22a, 25a and cords 22b, 25b are not aligned in the transverse direction. The x spacing is located adjacent the cord 25a, and the y spacing is located adjacent the cord 22b. In this embodiment, due to the location of the x and y spacing, there is no double layer of cords in the lap joint.

Figure 6 illustrates an embodiment 60 of the invention which is the same as the embodiment of Figure 4, with the following differences In this embodiment, the ply ends 62, 64 are angled. An angle beta is formed between the angled ply end 62 with the transverse direction. The angle beta is greater than 90 degrees but less than 180 degrees. An angle alpha is formed between the angled ply end 64 with the transverse direction. The angle alpha is greater than 90 degrees but less than 180 degrees. In one embodiment, alpha is equal to beta. The embodiments of Figs. 5A and 5B may also be combined with this embodiment so that the ply ends 21, 23 are angled.

The resulting lap joints described above have the strength of the prior art lap joint but without the disadvantage of the overlap of two functional cords.

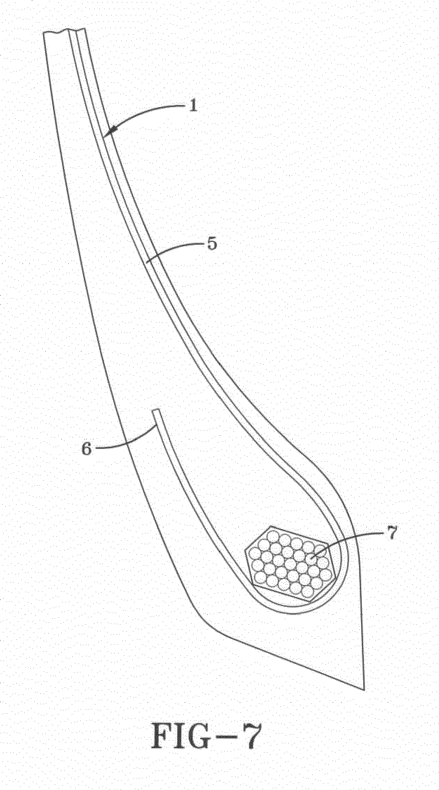

Figure 7 illustrates a tire 1 that has a layer of ply 5 wrapped around a bead 7 forming a ply turn-up portion 6. The ply 5 is formed from a plurality of ply strips lap spliced together as shown in Figures 1-2 formed with a lap joints of any of the inventions described herein. The reinforcement cords are preferably oriented in the radial direction of the tire. When the lap joint of Figure 4 is used, cords 22a, 25a and 22b, 25b align in a transverse direction (perpendicular to the radial direction). The spacing x and spacing y likewise align in the transverse direction, perpendicular to the radial direction.

## Claims

1. A method of forming a layer of tire ply (5, 16), the method comprising the steps:
a) providing a first strip of ply (20) having a plurality of evenly spaced reinforcement cords (22) with a spacing s and having a lateral end (21), wherein two cords (22a, 22b) at the lateral end (21) are not evenly spaced or spaced at a distance different from said spacing s, and said two cords (22a, 22b) are spaced apart a distance x, wherein x is not equal to s, and wherein an angle β is formed between the ply end (21) and with the transverse direction, the angle β being greater than 90 degrees but less than 180 degrees;
b) providing a second strip of ply (24) having a plurality of evenly spaced reinforcement cords (25) having a spacing c and having a lateral end (23), wherein two cords (25a, 25b) at the lateral end (23) are not evenly spaced or spaced at a distance different from said spacing c, and said two cords (25a, 25b) are spaced apart a distance y, wherein y is not equal to c; and wherein an angle α is formed between the ply end (23) and with the transverse direction, the angle α being greater than 90 degrees but less than 180 degrees;
and
c) joining the first and second lateral ends (21, 25) so that the spacing x completely overlaps with the spacing y so that they are in a parallel relationship and x equals y.

2. The method of claim 1 wherein y is greater than c and/or wherein x is greater than s.

3. The method of claim 1 wherein y is greater than 2*c and/or wherein x is greater than 2*s.

4. The method of claim 1 wherein s equals c.

5. The method of at least one of the previous claims wherein the two cords (22a, 22b) of the first strip (20) of ply are the last two cords on the end of the first strip (20); and/or wherein the two cords (25a, 25b) of the second strip (24) of ply are the last two cords on the end of the second strip (24).

6. The method of at least one of the previous claims wherein the cords (22a, 22b) of the first strip lateral end (21) are in parallel alignment with the cords (25a, 25b) of the second strip lateral end (23).

7. The method of at least one of the previous claims wherein the spacing x between the last two cords (22a, 22b) of the first strip of ply (20) is in the range of from 1.5*s to 4*s or in the range of from 2*s to 3.5*s or 2.5*s to 3*s; and wherein the spacing y between the last two cords (25a, 25b) of the second strip of ply (24) is in the range of from 1.5*c to 4*c or in the range of from 2*c to 3.5*c or 2.5*c to 3*c.

8. The method of at least one of the previous claims wherein the spacing x between the last two cords (22a, 22b) of the first strip of ply (20) is equal to 2*s + D, wherein D is the cord diameter in the first strip of ply (20); and/or wherein the spacing y between the last two cords (25a, 25b) of the second strip of ply (24) is equal to 2*c + D', wherein D' is the cord diameter in the second strip of ply (24), and wherein D = D' or wherein D≠D'.

9. The method of at least one of the previous claims wherein the spacing x between the last two cords (22a, 22b) of the first strip of ply (20) is greater than 2*s + D, wherein D is the cord diameter in the first strip of ply (20); and/or wherein the spacing y between the last two cords (25a, 25b) of the second strip of ply (24) is greater than 2*c + D', wherein D' is the cord diameter in the second strip of ply (24), and wherein D = D' or wherein D≠D'.

10. A pneumatic tire, preferably a pneumatic radial tire, comprising a carcass ply (5) wound around each of a pair of bead cores (7), wherein the carcass ply (5) is a ply made in accordance with at least one of the previous claims.

## Patentansprüche

1. Verfahren zur Bildung einer Schicht von Reifenverstärkungslage (5, 16), wobei das Verfahren folgende Schritte umfasst:
a) Bereitstellen eines ersten Streifens von Verstärkungslage (20), der eine Vielzahl gleichmäßig beabstandeter Verstärkungskorde (22) mit einer Beabstandung s aufweist und ein laterales Ende (21) aufweist, wobei zwei Korde (22a, 22b) an dem lateralen Ende (21) nicht gleichmäßig beabstandet oder in einem Abstand verschieden von der Beabstandung s beabstandet sind und die zwei Korde (22a, 22b) um einen Abstand x beabstandet sind, wobei x nicht gleich s ist, und wobei ein Winkel β zwischen dem Verstärkungslagenende (21) und mit der Querrichtung gebildet wird, wobei der Winkel β größer als 90 Grad, jedoch kleiner als 180 Grad ist;
b) Bereitstellen eines zweiten Streifens von Verstärkungslage (24), der eine Vielzahl gleichmäßig beabstandeter Verstärkungskorde (25) mit einer Beabstandung c aufweist und ein laterales Ende (23) aufweist, wobei zwei Korde (25a, 25b) an dem lateralen Ende (23) nicht gleichmäßig beabstandet oder in einem Abstand verschieden von der Beabstandung c beabstandet sind und die zwei Korde (25a, 25b) um einen Abstand y beabstandet sind, wobei y nicht gleich c ist; und wobei ein Winkel a zwischen dem Verstärkungslagenende (23) und mit der Querrichtung gebildet wird, wobei der Winkel a größer als 90 Grad, jedoch kleiner als 180 Grad ist;
und
c) Zusammenfügen des ersten und des zweiten lateralen Endes (21, 25), sodass die Beabstandung x sich vollständig mit der Beabstandung y überlappt, sodass sie sich in einem parallelen Verhältnis befinden und x gleich y ist.

2. Verfahren nach Anspruch 1, wobei y größer als c ist und/oder wobei x größer als s ist.

3. Verfahren nach Anspruch 1, wobei y größer als 2*c ist und/oder wobei x größer als 2*s ist.

4. Verfahren nach Anspruch 1, wobei s gleich c ist.

5. Verfahren nach mindestens einem der vorhergehenden Ansprüche, wobei die zwei Korde (22a, 22b) des ersten Streifens (20) von Verstärkungslage die letzten zwei Korde am Ende des ersten Streifens (20) sind; und/oder wobei die zwei Korde (25a, 25b) des zweiten Streifens (24) von Verstärkungslage die letzten zwei Korde am Ende des zweiten Streifens (24) sind.

6. Verfahren nach mindestens einem der vorhergehenden Ansprüche, wobei die Korde (22a, 22b) des lateralen Endes (21) des ersten Streifens in paralleler Ausrichtung mit den Korden (25a, 25b) des lateralen Endes (23) des zweiten Streifens stehen.

7. Verfahren nach mindestens einem der vorhergehenden Ansprüche, wobei die Beabstandung x zwischen den letzten zwei Korden (22a, 22b) des ersten Streifens von Verstärkungslage (20) im Bereich von 1,5*s bis 4*s oder im Bereich von 2*s bis 3,5*s oder 2,5*s bis 3*s liegt; und wobei die Beabstandung y zwischen den letzten zwei Korden (25a, 25b) des zweiten Streifens von Verstärkungslage (24) im Bereich von 1,5*c bis 4*c oder im Bereich von 2*c bis 3,5*c oder 2,5*c bis 3*c liegt.

8. Verfahren nach mindestens einem der vorhergehenden Ansprüche, wobei die Beabstandung x zwischen den letzten zwei Korden (22a, 22b) des ersten Streifens von Verstärkungslage (20) gleich 2*s + D ist, wobei D der Korddurchmesser in dem ersten Streifen von Verstärkungslage (20) ist; und/oder wobei die Beabstandung y zwischen den letzten zwei Korden (25a, 25b) des zweiten Streifens von Verstärkungslage (24) gleich 2*c + D' ist, wobei D' der Korddurchmesser in dem zweiten Streifen von Verstärkungslage (24) ist, und wobei D = D' oder wobei D ≠ D'.

9. Verfahren nach mindestens einem der vorhergehenden Ansprüche, wobei die Beabstandung x zwischen den letzten zwei Korden (22a, 22b) des ersten Streifens von Verstärkungslage (20) größer als 2*s + D ist, wobei D der Korddurchmesser in dem ersten Streifen von Verstärkungslage (20) ist; und/oder wobei die Beabstandung y zwischen den letzten zwei Korden (25a, 25b) des zweiten Streifens von Verstärkungslage (24) größer als 2*c + D' ist, wobei D' der Korddurchmesser in dem zweiten Streifen von Verstärkungslage (24) ist, und wobei D = D' oder wobei D ≠ D'.

10. Luftreifen, bevorzugt ein Radialluftreifen, umfassend eine Karkassenverstärkungslage (5), die um jeden eines Paars von Wulstkernen (7) herumgeschlagen ist, wobei die Karkassenverstärkungslage (5) eine gemäß mindestens einem der vorhergehenden Ansprüche ausgeführte Verstärkungslage ist.

## Revendications

1. Procédé de formation d'une couche de nappe de bandage pneumatique (5, 16), le procédé comprenant les étapes consistant à :
a) procurer une première bande de nappe (20) possédant un certain nombre de câblés de renforcement (22) disposés à intervalles réguliers avec un écartement s et possédant une extrémité latérale (21) ; dans lequel deux câblés (22a, 22b) à l'extrémité latérale (21) ne sont pas disposés à intervalles réguliers ou sont espacés à une distance différente par rapport audit écartement s, et lesdits deux câblés (22a, 22b) sont espacés l'un de l'autre sur une distance x, où x n'est pas égal à s ; et dans lequel un angle β est formé entre l'extrémité de nappe (21) et la direction transversale, l'angle β étant supérieur à 90°, mais inférieur à 180° ;
b) procurer une seconde bande de nappe (24) possédant un certain nombre de câblés de renforcement (25) disposés à intervalles réguliers avec un écartement c et possédant une extrémité latérale (23) ; dans lequel deux câblés (25a, 25b) à l'extrémité latérale (23) ne sont pas disposés à intervalles réguliers ou sont espacés à une distance différente par rapport audit écartement c, et lesdits deux câblés (25a, 25b) sont espacés l'un de l'autre sur une distance y, où y n'est pas égal à c ; et dans lequel un angle α est formé entre l'extrémité de nappe (23) et la direction transversale, l'angle α étant supérieur à 90°, mais inférieur à 180° ; et
c) joindre la première et la seconde extrémité latérale (21, 25) d'une manière telle que l'écartement x chevauche complètement l'écartement y tant et si bien qu'elles sont disposées parallèlement l'une à l'autre et d'une manière telle que x est égal à y.

2. Procédé selon la revendication 1, dans lequel y est supérieur à c et/ou dans lequel x est supérieur à s.

3. Procédé selon la revendication 1, dans lequel y est supérieur à 2*c et/ou dans lequel x est supérieur à 2*s.

4. Procédé selon la revendication 1, dans lequel s est égal à c.

5. Procédé selon au moins une des revendications précédentes, dans lequel les deux câblés (22a, 22b) de la première bande de nappe (20) représentent les deux derniers câblés à l'extrémité de la première bande (20) ; et/ou dans lequel les deux câblés (25a, 25b) de la seconde bande de nappe (24) représentent les deux derniers câblés à l'extrémité de la seconde bande (24).

6. Procédé selon au moins une des revendications précédentes, dans lequel les deux câblés (22a, 22b) de l'extrémité latérale (21) de la première bande sont disposés en alignement parallèle avec les câblés (25a, 25b) de l'extrémité latérale (23) de la seconde bande.

7. Procédé selon au moins une des revendications précédentes, dans lequel l'écartement x entre les deux derniers câblés (22a, 22b) de la première bande de nappe (20) se situe dans la plage de 1,5*s à 4*s ou dans la plage de 2*s à 3,5*s ou de 2,5*s à 3*s ; et dans lequel l'écartement y entre les deux derniers câblés (25a, 25b) de la seconde bande de nappe (24) se situe dans la plage de 1,5*c à 4*c ou dans la plage de 2*c à 3,5*c ou de 2,5*c à 3*c.

8. Procédé selon au moins une des revendications précédentes, dans lequel l'écartement x entre les deux derniers câblés (22a, 22b) de la première bande de nappe (20) est égal à 2*s + D, où D représente le diamètre de câblé dans la première bande de nappe (20) ; et/ou dans lequel l'écartement y entre les deux derniers câblés (25a, 25b) de la seconde bande de nappe (24) est égal à 2*c + D', où D' représente le diamètre de câblé dans la seconde bande de nappe (24) ; et dans lequel D = D' ou dans lequel D ≠ D'.

9. Procédé selon au moins une des revendications précédentes, dans lequel l'écartement x entre les deux derniers câblés (22a, 22b) de la première bande de nappe (20) est supérieur à 2*s + D, où D représente le diamètre de câblé dans la première bande de nappe (20) ; et/ou dans lequel l'écartement y entre les deux derniers câblés (25a, 25b) de la seconde bande de nappe (24) est supérieur à 2*c + D', où D' représente le diamètre de câblé dans la seconde bande de nappe (24) ; et dans lequel D = D' ou dans lequel D ≠ D'.

10. Bandage pneumatique, de préférence bandage pneumatique à nappe radiale, comprenant une nappe de carcasse (5) enroulée autour respectivement d'une paire de tringles de talons (7) ; dans lequel la nappe de carcasse (5) représente une nappe réalisée conformément à au moins une des revendications précédentes.
